(19) Europäisches Patentamt / European Patent Office / Office européen des brevets

(11) **EP 4 079 776 A1**

(12) **EUROPEAN PATENT APPLICATION**

(43) Date of publication:
**26.10.2022 Bulletin 2022/43**

(21) Application number: **22168424.4**

(22) Date of filing: **14.04.2022**

(51) International Patent Classification (IPC):
**C08F 220/18** (2006.01)     **C09J 4/00** (2006.01)
**G02B 1/00** (2006.01)

(52) Cooperative Patent Classification (CPC):
(C-Sets available)
**C08F 220/1808; C08F 220/1812; C09J 4/00;**
**G02B 1/00**                                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.04.2021 KR 20210049247**

(71) Applicant: **Samsung Electronics Co., Ltd.**
**Suwon-si, Gyeonggi-do 16677 (KR)**

(72) Inventors:
• **Kim, Chansu**
  **Suwon-si, 16678 (KR)**
• **Choi, Yoonsun**
  **Suwon-si, 16678 (KR)**
• **Lee, Jinho**
  **Suwon-si, 16678 (KR)**

(74) Representative: **Grünecker Patent- und
Rechtsanwälte
PartG mbB
Leopoldstraße 4
80802 München (DE)**

(54) **ADHESIVE COMPOSITION, ADHESIVE LAYER, AND DISPLAY APPARATUS FOR THREE-DIMENSIONAL HEAD-UP DISPLAY INCLUDING THE SAME**

(57)     An adhesive composition, an adhesive layer, and a display apparatus for a three-dimensional (3D) head-up display (HUD) including the adhesive layer are provided. The adhesive composition may include an acrylic acid ester-based monomer, an acrylic acid-based monomer, an initiator, and a curing agent.

FIG. 1

(52) Cooperative Patent Classification (CPC): (Cont.)

C-Sets
**C08F 220/1808, C08F 220/06, C08F 220/20,
C08F 222/102;
C08F 220/1812, C08F 220/06, C08F 220/20,
C08F 222/102;
C09J 4/00, C08F 220/1808;
C09J 4/00, C08F 220/1812**

**Description**

BACKGROUND

1. Field

Methods and apparatuses consistent with example embodiments relate to an adhesive composition, an adhesive layer, and a display apparatus for a three-dimensional (3D) head-up display (HUD) including the adhesive layer.

2. Description of Related Art

The most dominant factor among factors for recognizing a three-dimensional (3D) image may be a difference between images viewed at both eyes of a user. A scheme for displaying different images to both eyes of a user may include, for example, a glasses scheme of obtaining a desired image through filtering using, for example, polarization-based division, time division, or wavelength division of varying a wavelength of a primary color, and a glasses-free scheme of displaying each image only in a predetermined space using a 3D conversion device, such as, for example, a parallax barrier, a lenticular lens, or a directional backlight unit (BLU). The glasses-free scheme may reduce an inconvenience of wearing glasses. For example, a 3D image may also be provided by an optical system, such as, for example, a mirror or a lens. In this example, a direction of light may be changed by the optical system, and accordingly, a change in the direction of the light may need to be taken into consideration during rendering of the 3D image.

A head-up display (HUD) system may generate a virtual image in front of a driver and may display information in the virtual image, to provide a variety of information to the driver. The information provided to the driver may include, for example, navigation information and dashboard information, such as, for example, a vehicle speed, a fuel level, or an engine revolution per minute (RPM). A driver using a HUD system may more easily recognize the information displayed in front without the need to turn his or her gaze during driving, and thus driving safety may be enhanced. In addition to navigation information and dashboard information, a HUD system may also provide the driver with, for example, lane marking, construction marking, traffic accident marking, or a warning sign, such as a sign indicating a pedestrian to assist with driving when a from view is not clear, using an augmented reality (AR) scheme.

However, to realize high quality 3D using a HUD, there is a need, for example, for a precise eye tracking technology and focusing to inhibit a moire pattern and crosstalk, a need to secure a BLU of a liquid crystal display (LCD) with high luminance, and a need to ensure dimensional stability of a lens.

The above description has been possessed or acquired by the inventor(s) in the course of conceiving the present disclosure and is not necessarily an art publicly known before the present application is filed.

SUMMARY

The subject matter of the invention is as set out in the appended claims.

One or more example embodiments may address one or more of the above problems and/or disadvantages and/or may address other problems and/or disadvantages not described above. Also, the example embodiments are not required to overcome one or more of the disadvantages described above, and thus, an example embodiment may not overcome any of the problems described above.

Example embodiments may provide an adhesive composition, an adhesive layer available for a three-dimensional (3D) head-up display (HUD), and a display apparatus for a 3D HUD including the adhesive layer.

However, aspects of the present disclosure are not limited to the one set forth herein, and other aspects not mentioned herein would be clearly understood by one of ordinary skill in the art from the following description.

Example embodiments may provide an adhesive composition, an adhesive layer, and a display apparatus for a 3D HUD including the adhesive layer.

According to an aspect of the present disclosure, there is provided an adhesive composition including an acrylic acid ester-based monomer, an acrylic acid-based monomer, an initiator, and a curing agent.

Additional aspects of example embodiments will be set forth in part in the description which follows and, in part, will be apparent from the description, or may be learned by practice of the disclosure.

According to example embodiments, an adhesive composition, an adhesive layer available for a 3D HUD, and a display apparatus for a 3D HUD including the adhesive layer may be provided.

According to example embodiments, an adhesive layer prepared using an adhesive composition may maintain a transparency under external environmental conditions, such as, for example, a high temperature, a low temperature, a high humidity, or direct sunlight, or combinations of one or more of these conditions, and may, for example, be excellent in a peel strength and/or a visibility.

According to example embodiments, the adhesive layer may have a low shear modulus at a high temperature so that transfer of stress may be suppressed.

Additional features and/or advantages of the present disclosure are described further below. This summary section is meant merely to illustrate certain features of the disclosure, and is not meant to limit the scope of the disclosure in any way. The failure to discuss a specific feature or embodiment of the disclosure, or the inclusion of one or more features in this summary section, should not be construed to limit the claims.

BRIEF DESCRIPTION OF THE DRAWINGS

The above and/or other aspects will be more apparent by describing certain example embodiments, taken in conjunction with the accompanying drawings, in which:

FIG. 1 is a perspective view of a lenticular lens according to various example embodiments;
FIG. 2 is a perspective view of a display apparatus for a three-dimensional (3D) head-up display (HUD) according to various example embodiments; and
FIG. 3 is a cross-sectional view of a display apparatus for a 3D HUD according to various example embodiments.

DETAILED DESCRIPTION

Hereinafter, example embodiments will be described in detail with reference to the accompanying drawings. However, various alterations and modifications may be made to the example embodiments. The example embodiments are not construed as limited to the disclosure and should be understood to include all changes, equivalents, and replacements within the idea and the technical scope of the disclosure.

Throughout the accompanying drawings and the detailed description, unless otherwise described, the same drawing reference numerals will be understood to refer to the same elements, features, and structures. The relative size and depiction of these elements may be exaggerated for clarity, illustration, and convenience.

The terminology used herein is for the purpose of describing particular example embodiments only and is not to be limiting of the example embodiments. As used herein, the singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the example embodiments with reference to the accompanying drawings, like reference numerals refer to like constituent elements and a repeated description related thereto will be omitted. In the description of example embodiments, detailed description of well-known related technologies will be omitted when it is deemed that such description will cause ambiguous interpretation of the present disclosure.

Also, the terms "first," "second," "A," "B," "(a)," "(b)," and the like may be used herein to describe components according to example embodiments. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

A component having a common function with a component included in one example embodiment is described using a like name in another example embodiment. Unless otherwise described, description made in one example embodiment may be applicable to another example embodiment and detailed description within a duplicate range is omitted.

As used herein, terms such as "about," "approximately," "substantially," and "significantly" will be understood by a person of ordinary skill in the art and will vary in some extent depending on the context in which they are used. If there are uses of the term which are not clear to persons of ordinary skill in the art given the context in which it is used, "about" and "approximately" will mean plus or minus <10% of particular term, and "substantially" and "significantly" will mean plus or minus >10% of the particular term.

Unless otherwise stated, each range disclosed herein is simply a shorthand format for presenting information and will be understood to encompass and be a disclosure of each discrete point and all possible subranges within the range, including decimals (when appropriate) when a range is disclosed using integers.

According to various example embodiments, to implement a three-dimensional (3D) display, a glasses-free system and a glasses system may be used. As an example of a glasses-free system that does not require glasses specially designed to implement 3D, a scheme of using a lenticular lens may be provided.

According to various example embodiments, a lenticular lens may refer to a lens that includes a plurality of convex lenticules formed on one surface thereof, and may be introduced into a 3D display apparatus to express stereoscopic 3D information.

For example, the lenticular lens may be introduced into a vehicle, and may have an advantage of providing a 3D head-up display (HUD) to a user. The vehicle may have a windshield in a moving direction of the vehicle, such as the forward moving direction, so that a HUD may be displayed on the windshield. In particular, for a 3D HUD, an image with a difference in visual information between a left eye and a right eye of a user may need to be provided.

The lenticular lens may include an adhesive layer, a base substrate formed on (or directly contacting) the adhesive layer, and a pattern layer formed on (or directly contacting) the base substrate.

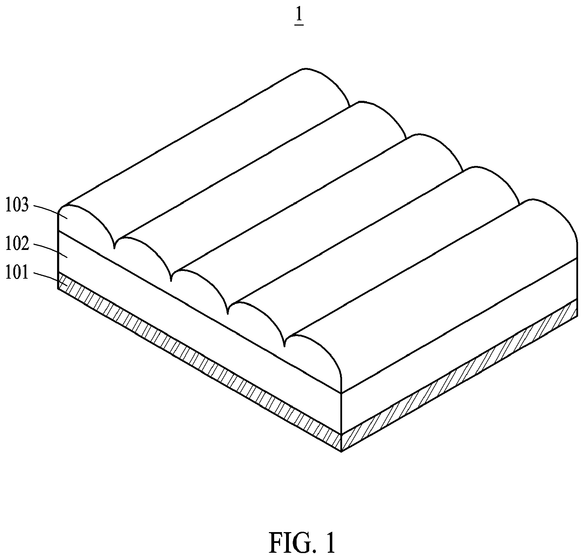

FIG. 1 is a perspective view of an example of a lenticular lens according to various example embodiments.

Referring to FIG. 1, a lenticular lens 1 may include an adhesive layer 101, a base substrate 102, and a pattern layer 103.

For example, the adhesive layer 101 may be prepared by thermally curing or photo-curing an adhesive composition.

For example, the adhesive layer 101 may be formed by applying the adhesive composition onto the base substrate 102. In some aspects, a surface of the base substrate may be prepared for receiving the adhesive composition, such as, for example, by cleaning, surface roughening, or the like.

In an example of an automobile as one of various vehicles, a temperature in the automobile may rapidly change (for example, in a variable temperature range of about -40°C to about 90°C), the automobile may be easily exposed to direct sunlight, and may be exposed to various humidity conditions depending on a weather environment such as snow or rain.

The lenticular lens according to various example embodiments may have strong resistance to a high temperature, a high humidity, and/or sunlight, caused by the above-described outdoor exposure, to be mounted on a vehicle. In other words, a lenticular lens suitable for a vehicle may be provided.

According to various example embodiments, the adhesive composition may include an acrylic acid ester-based monomer, an acrylic acid-based monomer, an initiator, and a curing agent.

For example, when the adhesive composition is used to form an adhesive layer, shrinkage caused by an external environment may be minimized. In particular, the adhesive composition may have an advantage in that the adhesive composition does not transfer, to the lenticular lens, stress caused by expansion or shrinkage of a base material (for example, a polarizing film layer) attachable to the lenticular lens.

The acrylic acid ester-based monomer is generally known in the art and may include, for example, an alkyl acrylic acid ester monomer including an alkyl group having 2 to 14 carbon atoms.

The alkyl acrylic acid ester monomer may include, for example, at least one of ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate. The alkyl acrylic acid ester monomer may be present in an amount of 50% by weight (wt %) or greater in the adhesive composition.

According to various example embodiments, the alkyl acrylic acid ester monomer may be 2-ethylhexyl (meth)acrylate.

The alkyl acrylic acid ester monomer may include the alkyl group having 2 to 14 carbon atoms. When a number of carbon atoms in the alkyl group is greater than or equal to "15", a glass transition temperature (Tg) of the adhesive composition may increase, and adhesion may decrease.

According to various example embodiments, the alkyl acrylic acid ester monomer may be present in an amount of 50 wt % or greater in the adhesive composition.

According to various example embodiments, the alkyl acrylic acid ester monomer may be present in an amount of 50 wt % to 70 wt % in the adhesive composition.

For example, when the amount of the alkyl acrylic acid ester monomer in the adhesive composition is less than 50 wt %, a peel strength of the adhesive layer 101 prepared by the adhesive composition may increase.

According to various example embodiments, the acrylic acid ester-based monomer may include a hydroxyl acrylic acid ester monomer.

The hydroxyl acrylic acid ester monomer may include, for example, at least one of 2-hydroxyethyl (meth)acrylate, 2-hydroxypropyl (meth)acrylate, 4-hydroxybutyl (meth)acrylate, 2-hydroxy propylene glycol (meth)acrylate, or 2-hydroxy propylene (meth)acrylate.

The hydroxyl acrylic acid ester monomer may indicate that a hydroxyl group (-OH) is bonded to the acrylic acid ester monomer.

According to various example embodiments, the hydroxyl acrylic acid ester monomer may be 2-hydroxyethyl (meth)acrylate.

According to various example embodiments, the hydroxyl acrylic acid ester monomer may be present in an amount of 5 wt % to 30 wt % in the adhesive composition.

For example, when the amount of the hydroxyl acrylic acid ester monomer is less than 5 wt %, a peel strength, and/or an efficiency of cutting (for example, punching) may decrease. When the amount of the hydroxyl acrylic acid ester monomer exceeds 30 wt %, the adhesive composition may become hard, adhesion may decrease, and/or viscosity may increase, any of which may result in a decrease in processability.

According to various example embodiments, the acrylic acid ester-based monomer may further include a cyclic aliphatic monomer, such as, for example, isobornyl

(meth)acrylate. When included, the cyclic aliphatic monomer may be present in an amount up to 10 wt % in the adhesive composition.

According to various example embodiments, the cyclic aliphatic monomer may be isobornyl acrylate.

According to various example embodiments, the cyclic aliphatic monomer may be present in an amount of 10 wt % or less in the adhesive composition.

For example, when the amount of the cyclic aliphatic monomer in the adhesive composition exceeds 10 wt %, a product may become hard, which may result in a decrease in adhesion to the substrate.

According to various example embodiments, the acrylic acid-based monomer may include (meth)acrylic acid. The acrylic acid-based monomer may be present in an amount of 10 wt % to 40 wt % in the adhesive composition.

According to various example embodiments, the acrylic acid-based monomer may be acrylic acid.

The acrylic acid-based monomer may be present in an amount of 10 wt % to 40 wt % in the adhesive composition. For example, when the amount of the acrylic acid-based monomer is outside of the above range, a peel strength between a product and a substrate may decrease.

According to various example embodiments, the initiator may include, for example, at least one of a benzoin-based compound, a hydroxy ketone-based compound, or an amino ketone-based compound. The initiator may be present in an amount of 0.01 parts by weight to 3 parts by weight, relative to 100 parts by weight of the acrylic acid ester-based monomer.

According to various example embodiments, the initiator may induce a curing reaction of the adhesive composition by generating radicals by ultraviolet (UV), visible light, electromagnetic waves, or heat.

According to various example embodiments, the initiator may be present in an amount of 0.01 parts by weight to 3 parts by weight, relative to 100 parts by weight of the acrylic acid ester-based monomer.

For example, when the amount of the initiator is less than 0.01 parts by weight, relative to 100 parts by weight of the acrylic acid ester-based monomer, a reaction may not occur, and/or a reaction time may increase. When the amount of the initiator exceeds 3 parts by weight, a degree of polymerization when the adhesive composition is cured may decrease, and/or unreacted initiators may remain as impurities.

According to various example embodiments, the curing agent may include, for example, at least one of a polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, or boron trifluoride. The curing agent may be present in an amount of 0.01 parts by weight to 5 parts by weight, relative to 100 parts by weight of the acrylic acid ester-based monomer.

According to various example embodiments, the curing agent may be present in an amount of 0.01 parts by weight to 5 parts by weight, relative to 100 parts by weight of the acrylic acid ester-based monomer.

For example, when the amount of the curing agent is less than 0.01 parts by weight, relative to 100 parts by weight of the acrylic acid ester-based monomer, a reaction time may increase, and/or curing may be insufficiently performed. When the amount of the curing agent exceeds 5 parts by weight, the cured adhesive composition may become extremely hard, and/or unreacted curing agents may remain as impurities.

According to various example embodiments, the adhesive composition may have a light transmittance of 92% or greater at a wavelength of 550 nanometers (nm), and/or have a haze less than 2%.

According to various example embodiments, the adhesive layer may be prepared, for example, by thermally curing or photo-curing the adhesive composition.

According to various example embodiments, the adhesive layer may be formed on a base material.

According to various example embodiments, the adhesive layer may have a thickness of 5 micrometers ($\mu$m) to 100 $\mu$m, and may be formed by applying the adhesive composition onto the base material, using, for example, roll-to-roll coating, dip coating, slot die coating, gravure coating, spray coating, or the like.

According to various example embodiments, the adhesive layer may have a thickness of 5 $\mu$m to 20 $\mu$m.

For example, when the thickness of the adhesive layer is greater than 100 $\mu$m, a visibility of a display apparatus including the adhesive layer as one component may decrease. When the thickness of the adhesive layer is less than 5 $\mu$m, the adhesive layer may be easily removed and/or peeled off due to a lack of adhesion.

According to various example embodiments, the adhesive layer may have a shear modulus of 3 kilopascal (kPa) to 30 kPa at 85°C, and/or a shear modulus of 10 kPa to 100 kPa at 25°C.

According to various example embodiments, the adhesive layer may have a shear modulus of 30 kPa to 70 kPa at 25°C, and/or have a shear modulus of 5 kPa to 15 kPa at 85°C. The shear modulus is measured in accordance with ASTM E143.

According to various example embodiments, when the adhesive may be used in an environment with a severe temperature difference, it may be desirable to use an adhesive layer in which both a shear modulus measured at room temperature and a shear modulus measured at a high temperature are taken into consideration. In addition, if a shear modulus measured at a high temperature decreases, shrinkage of a lenticular lens according to various example embodiments may be suppressed.

According to various example embodiments, the adhesive layer may have a peel strength of 1,000 grams-force ($g_f$)/inch (2.54 cm) or greater according to ASTM D903.

The peel strength may be measured according to ASTM D903 by attaching a film or a lenticular lens to a surface of a panel or a glass plate using an adhesive layer to have a width of 25 millimeters (mm), by turning a free end of the film or the lenticular lens, and by pulling the free end in an opposite direction to a free end of the panel or the glass plate.

According to various example embodiments, the adhesive layer may have a peel strength of 1,500 $g_f$/inch (2.54 cm) or greater.

In an example, in the lenticular lens 1, the pattern layer 103 may be formed on one surface of the base substrate 102, and the adhesive layer 101 may be formed on a surface opposite to the one surface of the base substrate 102 on which the pattern layer 103 is formed. In another example, the adhesive layer 101 may be formed on one surface of the base substrate 102, and then the pattern layer 103 may be formed on a surface opposite to the one surface.

According to various example embodiments, the pattern layer 103 may be formed by applying an acrylic polymer onto the base substrate 102 to a uniform thickness through slot-die coating, roll-coating, bar-coating or the like, and then by performing curing under UV light and imprinting to have a pattern.

According to various example embodiments, the pattern layer 103 may be formed by applying the acrylic polymer onto the base substrate 102 to a thickness of 10 $\mu$m to 100 $\mu$m so that a pattern may be formed.

According to various example embodiments, the base substrate may include polyethylene terephthalate (PET).

According to various example embodiments, the base substrate may include uniaxially stretched PET.

For example, when a uniaxially stretched film is used as a base substrate, an optical characteristic may be excellent in comparison to when a biaxially stretched film is used.

Since a biaxially stretched PET has a characteristic of an optical anisotropy, a phase delay may occur differently depending on a position of a base substrate when linearly polarized light passes, so that linearly polarized light may be changed to circularly or elliptically polarized light, which may result in a decrease in luminance of an image. Since a constant phase difference in a uniaxially stretched PET may be maintained, a constant phase delay may be maintained regardless of the position of the base substrate.

According to various example embodiments, the lenticular lens may be formed so that a difference between a machine direction (MD) of the PET included in the base substrate and a polarization direction of a polarizing film layer that may be attached to the lenticular lens may be less than or equal to 5 degrees.

According to various example embodiments, the base substrate may have a thickness of 50 $\mu$m to 100 $\mu$m.

According to various example embodiments, the base substrate may have a thickness of 60 $\mu$m to 80 $\mu$m.

According to various example embodiments, the base substrate may have an optical retardation of 7,000 nm or greater at a wavelength of 550 nm.

According to various example embodiments, a relationship between a value of an optical retardation $R_e$ and luminance / may be represented as shown in Equation 1 below.

[Equation 1]

$$I/I_0 = \frac{1}{2}\sin^2\left(\pi\frac{R_e}{\lambda}\right)$$

For example, for a predetermined value of the optical retardation $R_e$, the luminance / may be expressed in a form of a sine function, and the value of the optical retardation $R_e$ may be calculated as a product of a refractive index deviation, a wavelength and a film.

In an example, when the value of the optical retardation $R_e$ is low, a wavelength with a low luminance and a wavelength with a high luminance may alternately occur in a visible ray region, which may result in a great luminance deviation and a chromatic dispersion. In another example, when the value of the optical retardation $R_e$ is greater than or equal to 7,000 nm, luminance may be uniform in wavelengths of all regions, so that chromatic dispersion may be eliminated.

According to various example embodiments, the optical retardation at the wavelength of 550 nm may have a value of 8,000 nm or greater, and in some aspects may have a value of 10,000 nm or greater.

In an example, when the base substrate has a moisture permeability of 100 g/m²·day or less and is left at 63°C and a relative humidity of 93% for 500 hours, a shrinkage ratio in a transverse direction (TD) of the base substrate may be 0.1% or less.

Since a film of the base substrate does not easily absorb moisture even under a high humidity condition, the base substrate may exhibit even performance regardless of a temperature.

According to various example embodiments, the pattern layer may include, for example, at least one acrylic polymer among ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, or tetradecyl (meth)acrylate.

According to various example embodiments, the pattern layer may further include, for example, ethylene oxide and/or urethane acrylate.

When ethylene oxide and/or urethane acrylate are further included, the pattern layer may have, for example, improved adhesion to the base substrate.

According to various example embodiments, the pattern layer may be formed by applying an acrylic polymer onto the base substrate.

According to various example embodiments, the pattern layer may be formed by applying an acrylic polymer onto the base substrate, performing photo-curing, and performing imprinting using a mold or the like so that a pattern may be formed.

According to various example embodiments, the pattern layer may have a pattern with a semicircular cross section.

According to various example embodiments, the pattern layer may have a plurality of patterns, each having a semicircular cross section, and may be for separating a left image and a right image.

According to various example embodiments, the pattern layer may include a plurality of lenticules.

According to various example embodiments, a pattern of the pattern layer may include a plurality of semicylindric lenticules, and an arrangement direction of the lenticular lens may be slanted at an angle of 10 degrees to 15 degrees, not in a normal vertical direction.

In the arrangement direction of the lenticular lens, an angle between a longitudinal direction of a lenticule and a normal line of one edge of the lenticular lens when the lenticular lens is viewed from the top may be measured.

According to various example embodiments, the pattern layer may be slanted at an angle of 10 degrees to 15 degrees vertically in a counterclockwise direction, and may in some aspects be slanted at about 12 degrees.

In an example, when an angle at which the pattern layer is slanted is greater than or equal to 15 degrees, moire may increase, and/or a resolution of a 3D image may decrease. In another example, when the angle at which the pattern layer is slanted is less than or equal to 10 degrees, moire may increase, and/or a quality of an image may decrease due to a black matrix.

According to various example embodiments, the pattern of the pattern layer may have a pitch of 60 $\mu$m to 150 $\mu$m, and/or may have a height of 3 $\mu$m to 20 $\mu$m.

According to various example embodiments, the pattern of the pattern layer may be formed by imprinting a portion of the acrylic polymer.

According to various example embodiments, the pattern of the pattern layer may have a pitch of 60 $\mu$m to 100 $\mu$m.

According to various example embodiments, the pattern layer may have a refractive index of 1.45 to 1.60, may have a light transmittance of 92% or greater at a wavelength of 550 nm, and/or may have a haze of 2% or less.

According to various example embodiments, the pattern layer may include, for example, at least one curing agent among polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, or boron trifluoride.

According to various example embodiments, the pattern layer may be formed by applying the acrylic polymer onto the base substrate and performing photo-curing. The curing agent may be included for the photo-curing.

According to various example embodiments, the pattern of the pattern layer may be formed through imprinting using a mold or the like.

According to various example embodiments, the pattern layer may include 20 wt % or less of an aromatic monomer.

Since the aromatic monomer has discoloration properties caused by heat and UV, a relatively small amount of an aromatic monomer may be included to prevent discoloration.

According to various example embodiments, in the pattern layer, the aromatic monomer may be included in an amount of 5 wt % or less, and in some aspects may be included in an amount of 3 wt % or less.

According to various example embodiments, the adhesive layer may have a thickness of 10 $\mu$m to 30 $\mu$m.

According to various example embodiments, a display apparatus for a 3D HUD may include a transparent substrate including a glass, a polarizing film layer formed on the transparent substrate, and a lenticular lens formed on the polarizing film layer. The lenticular lens may include an adhesive layer, a base substrate formed on the adhesive layer, and a pattern layer formed on the base substrate.

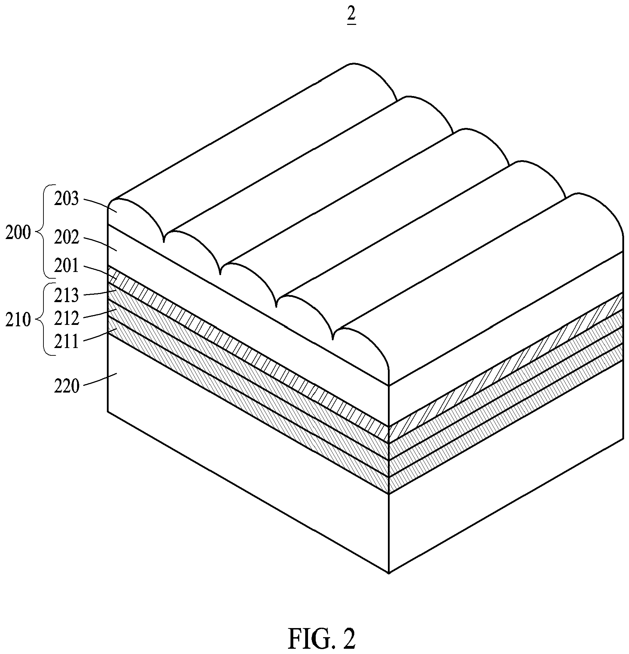

FIG. 2 is a perspective view of a display apparatus for a 3D HUD according to various example embodiments.

Referring to FIG. 2, a display apparatus 2 for a 3D HUD may include a transparent substrate 220, a polarizing film layer 210, and a lenticular lens 200 (for example, the lenticular lens 1 of FIG. 1). The lenticular lens 200 may include an adhesive layer 201, a base substrate 202, and a pattern layer 203 having the same composition(s) described above.

In FIG. 2, the polarizing film layer 210 may include a polarizing layer 212, a first protective layer 211, and a second protective layer 213. The first protective layer 211, and the second protective layer 213 may be attached to both surfaces of the polarizing layer 212.

According to various example embodiments, the polarizing layer 212 may include polyvinyl alcohol (PVA). The first protective layer 211 formed on a bottom surface of the polarizing layer 212 may include poly(methyl methacrylate) (PMMA). The second protective layer 213 formed on a surface opposite to the bottom surface of the polarizing layer 212 on which the first protective layer 211 is formed may include triacetyl cellulose (TAC).

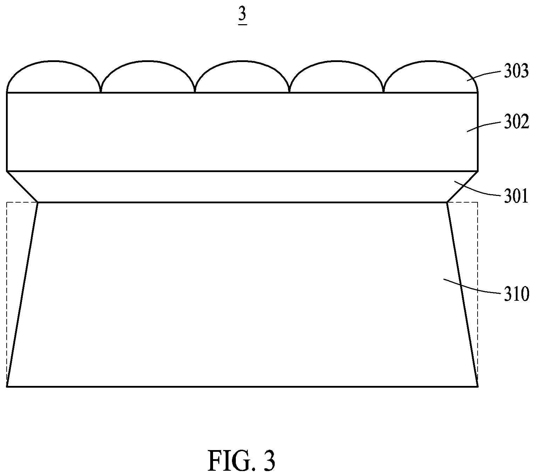

FIG. 3 is a cross-sectional view of a display apparatus for a 3D HUD according to various example embodiments.

Referring to FIG. 3, a polarizing film layer 310 (for example, the polarizing film layer 210 of FIG. 2) of a display apparatus 3 for a 3D HUD may be shrunken due to an external stimulus such as a high temperature or direct sunlight for a relatively long period of time. Stress caused by shrinkage of the polarizing film layer 310 may be mitigated by an adhesive layer 301 (for example, the adhesive layer 101 of FIG. 1), and may not be transferred to a base substrate 302 (for example, the base substrate 102 of FIG. 1) and a pattern layer 303 (for example, the pattern layer 103 of FIG. 1).

Referring to FIG. 3, the adhesive layer 301 may not transfer the stress caused by shrinkage of the polarizing film layer 310, and accordingly the pattern layer 303 may not be deformed, a left image and a right image passing through a lenticular lens may not overlap, rainbow spots may not occur, and/or a value of a phase difference caused by an angle of incidence of light may remain unchanged.

According to various example embodiments, overlapping between a left image and a right image passing through a lenticular lens may be represented by calculating crosstalk (X-talk, %). As shown in Equation 1 below, light $I_{sub\ pixel}$ emitted from a sub-pixel may be defined as a sum of luminance $I_{left}$ of the left image, luminance $I_{right}$ of the right image, and luminance $I_{stray\ light}$ of light lost by unnecessary reflection and scattering. The crosstalk may be defined as a proportion of images that do not contribute to an actual 3D image, as shown in Equation 2 below.

[Equation 1]

$$I_{sub\ pixel} = I_{left} + I_{right} + I_{stray\ light}$$

[Equation 2]

$$X\text{-talk}[\%] = I_{stray\ light}/(I_{left}+I_{right})\times100$$

For example, in some aspects of the disclosure, when the display apparatus 3 is left at 95°C for 200 hours, crosstalk may be 2% or less.

Table 1 shows a value obtained by measuring crosstalk due to shrinkage of a lenticular lens.

[Table 1]

| Lens shrinkage ratio | 0.01% | 0.03% | 0.05% | 0.1% |
|---|---|---|---|---|
| Crosstalk | 0.05% | 1% | 2% | 5% |

Referring to Table 1, it may be confirmed that the crosstalk exponentially increases as the shrinkage ratio of the lenticular lens increases. In some aspects of example embodiments, the lens shrinkage ratio may need to be less than or equal to 0.05% so that the crosstalk may be less than or equal to 2%.

According to various example embodiments, the base substrate 302 may be stretched and formed, and in particular, may be uniaxially stretched in an MD

For example, when the adhesive layer 301 is left at 95°C for 200 hours, a shrinkage ratio in a TD of the base substrate 302 may be 0.03% or less, and/or a shrinkage ratio in an MD of the base substrate 302 may be 0.2% or less.

According to various example embodiments, the display apparatus 3 may be mounted on a vehicle to implement a 3D HUD

Hereinafter, the present disclosure will be described in detail based on examples and comparative examples.

However, the following examples are provided only for purpose of illustrating the present disclosure, and should not be construed as limiting the present disclosure by the examples.

Preparation Example 1: Preparation of Adhesive Composition

Adhesive compositions according to Examples 1 and 2 and Comparative Examples 1 to 5 were prepared. Components of the adhesive compositions according to Examples 1 and 2 and Comparative Examples 1 to 5 are shown in Table 2 below. In the adhesive compositions in Table 2, 1-dodecanethiol also functions as a curing agent.

[Table 2]

|  | Monomer (amount) | Initiator (amount) |
|---|---|---|
| Example 1 | Lauryl acrylate (50%)<br>2-hydroethyl acrylate (30%)<br>Acrylic acid (18%)<br>1,6-Hexanedioldiacrylate (1%)<br>1-Dodecanethiol (0.5%) | Irgacure 184 (0.5%) |
| Example 2 | 2-Ethylhexyl acrylate (50%)<br>4-Hydroxybutyl acrylate (30%)<br>Acrylic acid (18%)<br>1,6-Hexanedioldiacrylate (1%)<br>1-Dodecanethiol (0.5%) | Irgacure 184 (0.5%) |
| Comparative Example 1 | 2-Ethylhexyl acrylate (50%)<br>2-Hydroxyethyl acrylate (30%)<br>Acrylic acid (18%)<br>1,6-Hexanedioldiacrylate (1%)<br>1-Dodecanethiol (0.5%) | Irgacure 184 (0.5%) |
| Comparative Example 2 | Lauryl acrylate (60%)<br>2-Ethylhexyl acrylate (30%)<br>Acrylic acid (8%)<br>1,6-Hexanedioldiacrylate (1%)<br>1-Dodecanethiol (0.5%) | Irgacure 184 (0.5%) |
| Comparative Example 3 | 2-Ethylhexyl acrylate (50%)<br>Isobornyl acrylate (30%)<br>Acrylic acid (18%)<br>1,6-Hexanedioldiacrylate (1%)<br>1-dodecanethiol (0.5%) | Irgacure 184 (0.5%) |
| Comparative Example 4 | 2-Ethylhexyl acrylate (70%)<br>Isobornyl acrylate (20%)<br>Acrylic acid (8%)<br>1,6-Hexanedioldiacrylate (1%)<br>1-dodecanethiol (0.5%) | Irgacure 184 (0.5%) |
| Comparative Example 5 | 2-Ethylhexyl acrylate (40%)<br>Isobornyl acrylate (40%)<br>Acrylic acid (18%)<br>1,6-Hexanedioldiacrylate (1%)<br>1-dodecanethiol (0.5%) | Irgacure 184 (0.5%) |

Experimental Example 1: Measurement of Shear Stress

Shear stress G' of adhesive films prepared by curing the adhesive compositions according to Examples 1 and 2 and Comparative Examples 1 to 5 in Table 2 was measured, as shown in Table 3 below. The shear stress G' was measured at 25°C and 85°C according to ASTM E143.

[Table 3]

|  | G' at 25°C [kPa] | G' at 85°C [kPa] |
|---|---|---|
| Example 1 | 53 | 9 |
| Example 2 | 50.9 | 7.9 |
| Comparative Example 1 | 69 | 27 |
| Comparative Example 2 | 17 | 8 |
| Comparative Example 3 | 24 | 8.5 |
| Comparative Example 4 | 18 | 5 |
| Comparative Example 5 | 50 | 11 |

Experimental Example 2: Measurement of Peel Strength

Each of adhesive films prepared using the adhesive compositions according to Examples 1 and 2 and Comparative Examples 1 to 5 in Table 2 was attached onto a liquid crystal display (LCD) panel or a glass panel to have a width of 25 mm, and a peel strength required to remove the adhesive films was measured as shown in Table 4 below. The peel strength was measured according to ASTM D903.

[Table 4]

|  | Peel strength [$g_f$/inch (2.54 cm)] |
|---|---|
| Example 1 | 2300 |
| Example 2 | 1700 |
| Comparative Example 1 | 2000 |
| Comparative Example 2 | 950 |
| Comparative Example 3 | 1500 |
| Comparative Example 4 | 700 |
| Comparative Example 5 | 1800 |

Experimental Example 3: Measurement of Shrinkage Ratio of Lenticular Lens

The adhesive films prepared using the adhesive compositions according to Examples 1 and 2 and Comparative Examples 1 to 5 in Table 2 were provided to measure a shrinkage ratio of a lenticular lens. A lens shrinkage ratio test was performed at a high temperature, for example, 90°C, for 200 hours, an align mark was marked at a position 0.7 mm away from each edge of a lenticular lens with a size of 90.5 mm $\times$ 50.7 mm, and a difference was measured with an optical microscope after the test was performed.

Shrinkage ratios of lenticular lenses including the adhesive films prepared using the adhesive compositions according to Examples 1 and 2 and Comparative Examples 1 to 5 in Table 2 were measured as shown in Table 5 below.

[Table 5]

|  | Lens shrinkage ratio in TD | Lens shrinkage ratio in MD |
|---|---|---|
| Example 1 | 0.01 % | 0.06 % |
| Example 2 | 0.02% | 0.10% |
| Comparative Example 1 | 0.07% | 0.10% |

(continued)

|  | Lens shrinkage ratio in TD | Lens shrinkage ratio in MD |
| --- | --- | --- |
| Comparative Example 2 | 0.02 % | 0.10% |
| Comparative Example 3 | 0.03 % | 0.21 % |
| Comparative Example 4 | 0.03 % | 0.07% |
| Comparative Example 5 | 0.03 % | 0.21% |

Based on the results according to Experimental Examples 1 to 3, it may be confirmed that adhesive layers prepared using the adhesive compositions according to Examples 1 and 2 have considerably low shear stress, that is, 10 kPa or less, at a high temperature, for example, 85°C, while ensuring a peel strength of 1,000 $g_f$/inch (2.54 cm) or greater. In addition, it may be confirmed that due to considerably low lens shrinkage ratios for each direction of a lens, it is possible to effectively suppress shrinkage of a polarizing film layer to the lenticular lens.

On the contrary, it may be confirmed that adhesive layers prepared using the adhesive compositions according to Comparative Examples 1 to 5 are not adequate to be used in a display apparatus for a 3D HUD that operates under severe conditions, due to their extremely high lens shrinkage ratio or low peel strength.

Preparation Example 2: Preparation of Pattern Layer Composition

Compositions according to Examples 3 to 6 and Comparative Examples 6 to 10 were prepared. Components of compositions according to Examples 3 to 6 and Comparative Examples 6 to 10 are shown in Table 6 below.

[Table 6]

|  |  | Monomer (amount) | Initiator and Additive (amount) |
| --- | --- | --- | --- |
|  | Example 3 | 2-Ethylhexyl acrylate (11%)<br>1,6-Hexanediol diacrylate (25%)<br>Polyethylene glycol dimethacrylate (15%)<br>Trimethylol propane triacrylate (5%)<br>Aliphatic urethane diacrylate (40%)<br>AE-1285 (0.5%) | Irgacure 754 (1.5%)<br>Darocur (1%)<br>Tinuvin 5151 (0.2%)<br>Tinuvin 400 (0.3%)<br>Tinuvin 292 (0.5%) |
|  | Example 4 | 2-Ethylhexyl acrylate (6%)<br>n-Butyl acrylate (5%)<br>1,6-Hexanediol diacrylate (25%)<br>Polyethylene glycol dimethacrylate (15%)<br>Trimethylol propane triacrylate (5%)<br>Aliphatic urethane diacrylate (40%)<br>AE-1285 (0.5%) | Irgacure 754 (1.5%)<br>Darocur (1%)<br>Tinuvin 5151 (0.2%)<br>Tinuvin 400 (0.3%)<br>Tinuvin 292 (0.5%) |
|  | Example 5 | Tetrahydrofurfuryl acrylate (11%)<br>1,6-Hexanediol diacrylate (25%)<br>Polyethylene glycol dimethacrylate (15%)<br>Trimethylol propane triacrylate (5%)<br>Aliphatic urethane diacrylate (40%) | Irgacure 754 (1.5%)<br>Darocur (1%)<br>Tinuvin 5151 (0.2%)<br>Tinuvin 400 (0.3%)<br>Tinuvin 292 (0.5%) |
|  |  | AE-1285 (0.5%) |  |
|  | Example 6 | Isobornyl acrylate (11%)<br>1,6-Hexanediol diacrylate (25%)<br>Polyethylene glycol dimethacrylate (15%)<br>Trimethylol propane triacrylate (5%) | Irgacure 754 (1.5%)<br>Darocur (1%)<br>Tinuvin 5151 (0.2%)<br>Tinuvin 400 (0.3%)<br>Tinuvin 292 (0.5%) |

(continued)

|  | Monomer (amount) | Initiator and Additive (amount) |
|---|---|---|
|  | Aliphatic urethane diacrylate (40%)<br>AE-1285 (0.5%) |  |
| Comparative Example 6 | 2-Ethylhexyl acrylate (11%)<br>1,6-Hexanediol diacrylate (25%)<br>Polyethylene glycol dimethacrylate (15%)<br>Trimethylol propane triacrylate (5%)<br>Aromatic urethane diacrylate (40%)<br>AE-1285 (0.5%) | Irgacure 754 (1.5%)<br>Darocur (1%)<br>Tinuvin 5151 (0.2%)<br>Tinuvin 400 (0.3%)<br>Tinuvin 292 (0.5%) |
| Comparative Example 7 | 2-Ethylhexyl acrylate (11%)<br>1,6-Hexanediol diacrylate (25%)<br>Polyethylene glycol dimethacrylate (15%)<br>Trimethylol propane triacrylate (5%)<br>Aromatic urethane diacrylate (38%)<br>AE-1285 (0.5%) | Irgacure 754 (1.5%)<br>Darocur (1%)<br>Tinuvin 5151 (0.4%)<br>Tinuvin 400 (0.6%)<br>Tinuvin 292 (1%) |
| Comparative Example 8 | 2-Ethylhexyl acrylate (11%)<br>1,6-Hexanediol diacrylate (25%)<br>Trimethylol propane triacrylate (5%)<br>Aliphatic urethane diacrylate (55%)<br>AE-1285 (0.5%) | Irgacure 754 (1.5%)<br>Darocur (1%)<br>Tinuvin 5151 (0.2%)<br>Tinuvin 400 (0.3%)<br>Tinuvin 292 (0.5%) |
| Comparative Example 9 | 2-Ethylhexyl acrylate (11%)<br>1,6-Hexanediol diacrylate (25%)<br>Ethoxylated bisphenol A dimethylacrylate (15%)<br>Trimethylol propane triacrylate (5%) | Irgacure 754 (1.5%)<br>Darocur (1%)<br>Tinuvin 5151 (0.2%)<br>Tinuvin 400 (0.3%)<br>Tinuvin 292 (0.5%) |
|  | Aliphatic urethane diacrylate (40%)<br>AE-1285 (0.5%) |  |
| Comparative Example 10 | 2-Hydroxyl-3-phenoxyproyl acrylate (11%)<br>1,6-Hexanediol diacrylate (25%)<br>Polyethylene glycol dimethacrylate (15%)<br>Trimethylol propane triacrylate (5%)<br>Aliphatic urethane diacrylate (40%)<br>AE-1285 (0.5%) | Irgacure 754 (1.5%)<br>Darocur (1%)<br>Tinuvin 5151 (0.2%)<br>Tinuvin 400 (0.3%)<br>Tinuvin 292 (0.5%) |
| *Paraloid AE-1285 Acrylic curing agent | | |

Experimental Example 4: Measurement of Optical Characteristics of Lenticular Lens

Pattern layers were prepared on base substrates using the compositions according to Examples 3 to 6 and Comparative Examples 6 to 10 in Table 6, and a refractive index, mold release properties, and UV discoloration of each of the pattern layers were measured.

In particular, the UV discoloration was obtained by measuring a degree of discoloration based on ASTM E313 and ASTM E1164 under conditions of a black panel temperature of 63°C, a chamber temperature of 50°C, a relative humidity (RH) of 50%, and an illuminance of 65 W/m$^2$ in a Xenon arc lamp. The degree of discoloration was measured using a Minolta CR-400 and calculated based on changes in x and y chromaticity coordinates, and whether the degree of discoloration is less than 1% or exceeds 5% is shown in Table 7 below. For the mold release property, the result "Bad" was determined when not easily separated, or stained from tearing apart, or deformation of height, width, surface by 5% or more.

[Table 7]

|  | Refractive index | Mold release properties | UV discoloration |
|---|---|---|---|
| Example 3 | 1.48 | Good | <1% |
| Example 4 | 1.48 | Good | <1% |
| Example 5 | 1.48 | Good | <1% |
| Example 6 | 1.48 | Good | <1% |
| Comparative Example 6 | 1.58 | Good | >5% |
| Comparative Example 7 | 1.58 | Good | >5% |
| Comparative Example 8 | 1.48 | Good | <1% |
| Comparative Example 9 | 1.58 | Good | >5% |
| Comparative Example 10 | 1.56 | Bad | >5% |

Experimental Example 5: Adhesion to Base Substrate

Pattern layers were prepared on base substrates using the compositions according to Examples 3 to 6 and Comparative Examples 6 to 10 in Table 6, and adhesion between the base substrates and the pattern layers was measured. A PET substrate was used as a base substrate.

To measure the adhesion, a pattern after peeling using a scheme based on ASTM 3359 or JIS K5900 5-6 was measured, and the adhesion was determined by values of 0B to 5B as shown in Table 8 below.

[Table 8]

|  | Adhesion |
|---|---|
| Example 3 | 5B |
| Example 4 | 5B |
| Example 5 | 5B |
| Example 6 | 5B |
| Comparative Example 6 | 5B |
| Comparative Example 7 | 5B |
| Comparative Example 8 | 0B |
| Comparative Example 9 | 0B |
| Comparative Example 10 | 5B |

Based on the results according to Experimental Examples 4 and 5, it may be confirmed that when the pattern layers prepared using the compositions according to Examples 3 to 6 are included, discoloration by UV is low because an amount of an aliphatic monomer is greater than an amount of an aromatic monomer.

On the contrary, it may be confirmed that the pattern layers prepared using the compositions according to Comparative Examples 6 to 10 are not adequate to be used in the display apparatus for a 3D HUD that operates under severe conditions due to poor adhesion to the base substrates or high UV discoloration based on a result of weather resistance.

While this disclosure includes example embodiments, it will be apparent to one of ordinary skill in the art that various changes in form and details may be made in these example embodiments without departing from the scope of the claims. The example embodiments described herein are to be considered in a descriptive sense only, and not for purposes of limitation. Descriptions of features or aspects in each example embodiment are to be considered as being applicable to similar features or aspects in other example embodiments. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. An adhesive composition comprising:

   an acrylic acid ester-based monomer;
   an acrylic acid-based monomer;
   an initiator; and
   a curing agent.

2. The adhesive composition of claim 1, wherein the acrylic acid ester-based monomer comprises an alkyl acrylic acid ester monomer comprising an alkyl group having 2 to 14 carbon atoms,

   preferably wherein the alkyl acrylic acid ester monomer comprises at least one selected from the group consisting of ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate, and the alkyl acrylic acid ester monomer is present in an amount of 50 % by weight (wt %) or greater in the adhesive composition.

3. The adhesive composition of claim 1, wherein the acrylic acid ester-based monomer comprises a hydroxyl acrylic acid ester monomer,

   preferably wherein the hydroxyl acrylic acid ester monomer comprises at least one selected from the group consisting of 2-hydroxyethyl (meth)acrylate, 2-hydroxypropyl (meth)acrylate, 4-hydroxybutyl (meth)acrylate, 2-hydroxy propylene glycol (meth)acrylate, and 2-hydroxy propylene (meth)acrylate, and the hydroxyl acrylic acid ester monomer is present in an amount of 5 wt % to 30 wt % in the adhesive composition.

4. The adhesive composition of any one of claims 1-3, wherein the acrylic acid ester-based monomer further comprises a cyclic aliphatic monomer,

   the cyclic aliphatic monomer comprises isobornyl (meth)acrylate, and
   the cyclic aliphatic monomer is present in an amount of 10 wt % or less in the adhesive composition.

5. The adhesive composition of any one of claims 1-4, wherein

   the acrylic acid-based monomer comprises (meth)acrylic acid, and
   the acrylic acid-based monomer is present in an amount of 10 wt % to 40 wt % in the adhesive composition.

6. The adhesive composition of any one of claims 1-5, wherein

   the initiator comprises at least one selected from the group consisting of a benzoin-based compound, a hydroxy ketone-based compound, and an amino ketone-based compound, and
   the initiator is present in an amount of 0.01 parts by weight to 3 parts by weight, relative to 100 parts by weight of the acrylic acid ester-based monomer.

7. The adhesive composition of any one of claims 1-6, wherein

   the curing agent comprises at least one selected from the group consisting of a polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, and boron trifluoride, and
   the curing agent is present in an amount of 0.01 parts by weight to 5 parts by weight, relative to 100 parts by weight of the acrylic acid ester-based monomer.

8. The adhesive composition of any one of claims 1-7, wherein the adhesive composition has a light transmittance of 92% or greater at a wavelength of 550 nanometers (nm), and a haze less than 2%.

9. The adhesive composition of any one of claims 1-8, wherein the acrylic acid ester-based monomer comprises an alkyl acrylic acid ester monomer,

the alkyl acrylic acid ester monomer comprises at least one selected from the group consisting of ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate,
the alkyl acrylic acid ester monomer is present in an amount of 50 % by weight (wt %) or greater in the adhesive composition,
the acrylic acid-based monomer is present in an amount of 10 wt % to 40 wt % in the adhesive composition,
the initiator comprises at least one selected from the group consisting of a benzoin-based compound, a hydroxy ketone-based compound, and an amino ketone-based compound
the initiator is present in an amount of 0.01 parts by weight to 3 parts by weight, relative to 100 parts by weight of the acrylic acid ester-based monomer,
the curing agent comprises at least one selected from the group consisting of a polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, and boron trifluoride, and
the curing agent is present in an amount of 0.01 parts by weight to 5 parts by weight, relative to 100 parts by weight of the acrylic acid ester-based monomer.

10. The adhesive composition of claim 9, wherein the acrylic acid ester-based monomer comprises a hydroxyl acrylic acid ester monomer selected from the group consisting of 2-hydroxyethyl (meth)acrylate, 2-hydroxypropyl (meth)acrylate, 4-hydroxybutyl (meth)acrylate, 2-hydroxy propylene glycol (meth)acrylate, and 2-hydroxy propylene (meth)acrylate, and

the hydroxyl acrylic acid ester monomer is present in an amount of 5 wt % to 30 wt % in the adhesive composition; and/or
wherein the acrylic acid ester-based monomer further comprises an isobornyl (meth)acrylate in an amount of 10 wt % or less in the adhesive composition.

11. An adhesive layer prepared by thermally curing or photo-curing the adhesive composition of any one of claims 1-10, wherein the adhesive layer is formed on a base material.

12. The adhesive layer of claim 11, wherein the adhesive layer has a thickness of 5 micrometers ($\mu$m) to 100 $\mu$m, and the adhesive layer is formed by applying the adhesive composition onto the base material, using roll-to-roll coating, dip coating, slot die coating, gravure coating, or spray coating.

13. The adhesive layer of claim 11 or 12, wherein the adhesive layer has a shear modulus of 3 kilopascal (kPa) to 30 kPa at 85°C, and a shear modulus of 10 kPa to 100 kPa at 25°C according to ASTM E143; and/or
wherein the adhesive layer has a peel strength of 1,000 grams-force ($g_f$)/inch (2.54 cm) or greater according to ASTM D903.

14. A display apparatus for a three-dimensional (3D) head-up display (HUD), the display apparatus comprising:

a transparent substrate comprising a glass;
a polarizing film layer provided on the transparent substrate; and
a lenticular lens provided on the polarizing film layer,
wherein the lenticular lens comprises an adhesive layer, a base substrate provided on the adhesive layer, and a pattern layer provided on the base substrate, and
wherein the adhesive layer is the adhesive layer of any one of claims 11-13.

15. The display apparatus of claim 14, wherein the display apparatus is configured such that, when the adhesive layer is left at 95°C for 200 hours, a shrinkage ratio in a transverse direction (TD) of the base substrate is 0.03% or less, and a shrinkage ratio in a machine direction (MD) of the base substrate is 0.2% or less;and/or
wherein the display apparatus is mounted on a vehicle to implement a 3D HUD

FIG. 1

2

FIG. 2

FIG. 3

**EUROPEAN SEARCH REPORT**

Application Number

EP 22 16 8424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 879 161 B2 (XIA JIANHUI [US]; EVERAERTS ALBERT I [US] ET AL.) 30 January 2018 (2018-01-30) * the whole document * | 1-15 | INV. C08F220/18 C09J4/00 G02B1/00 |
| X | CN 107 699 154 A (GUANGZHOU JINWANZHENG PRINTING MAT CO LTD) 16 February 2018 (2018-02-16) * the whole document * * paragraphs [0065] - [0068]; example 1 * | 1-11 | |
| X | KR 2020 0114882 A (DONGWOO FINE CHEM CO LTD [KR]) 7 October 2020 (2020-10-07) * paragraphs [0020] - [0022], [0027], [0036] - [0044], [0076], [0079], [0083]; examples * | 1-12 1-15 | |
| X Y | WO 2015/183782 A1 (3M INNOVATIVE PROPERTIES CO [US]) 3 December 2015 (2015-12-03) * examples; tables 2-9 * | 1-11,13 1-15 | TECHNICAL FIELDS SEARCHED (IPC) |
| X Y | US 2012/308833 A1 (LEE WOO-RAM [KR] ET AL) 6 December 2012 (2012-12-06) * paragraphs [0025] - [0026], [0042], [0048] - [0052], [0062] - [0066], [0072]; examples * | 1-4,6-8, 11,12,14 1-15 | C08F C09J G02B |
| X | KR 2011 0072119 A (UTIS CO LTD [KR]) 29 June 2011 (2011-06-29) * the whole document * * examples * | 1-4,6-8, 11,12 | |

The present search report has been drawn up for all claims

| Place of search | Date of completion of the search | Examiner |
|---|---|---|
| The Hague | 14 September 2022 | Droghetti, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 8424

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2022

| Patent document cited in search report | | Publication date | Patent family member(s) | | Publication date |
|---|---|---|---|---|---|
| US 9879161 | B2 | 30-01-2018 | CN | 103370387 A | 23-10-2013 |
| | | | CN | 108314979 A | 24-07-2018 |
| | | | JP | 6570562 B2 | 04-09-2019 |
| | | | JP | 2014510807 A | 01-05-2014 |
| | | | JP | 2017125195 A | 20-07-2017 |
| | | | KR | 20140012670 A | 03-02-2014 |
| | | | KR | 20150119968 A | 26-10-2015 |
| | | | TW | 201241130 A | 16-10-2012 |
| | | | US | 2013323521 A1 | 05-12-2013 |
| | | | WO | 2012112856 A1 | 23-08-2012 |
| CN 107699154 | A | 16-02-2018 | CN | 107699154 A | 16-02-2018 |
| | | | EP | 3673024 A1 | 01-07-2020 |
| | | | WO | 2019076261 A1 | 25-04-2019 |
| KR 20200114882 | A | 07-10-2020 | NONE | | |
| WO 2015183782 | A1 | 03-12-2015 | CN | 106414642 A | 15-02-2017 |
| | | | EP | 3149053 A1 | 05-04-2017 |
| | | | JP | 6275284 B2 | 07-02-2018 |
| | | | JP | 2017522402 A | 10-08-2017 |
| | | | KR | 20160142403 A | 12-12-2016 |
| | | | US | 2017081567 A1 | 23-03-2017 |
| | | | WO | 2015183782 A1 | 03-12-2015 |
| US 2012308833 | A1 | 06-12-2012 | JP | 2012251136 A | 20-12-2012 |
| | | | KR | 20120133890 A | 11-12-2012 |
| | | | TW | 201249947 A | 16-12-2012 |
| | | | US | 2012308833 A1 | 06-12-2012 |
| KR 20110072119 | A | 29-06-2011 | NONE | | |

EPO FORM P0459

For more details about this annex : see Official Journal of the European Patent Office, No. 12/82